# EUROPEAN PATENT APPLICATION

(11) **EP 4 447 603 A1**
(43) Date of publication of application: **16.10.2024**
(21) Application number: 23760281.8
(22) Date of filing: 02.02.2023
(51) Int. Cl.: H04W 76/14, H04W 76/12, H04W 4/08, H04W 8/00, H04W 88/02

(54) **WIRELESS COMMUNICATION METHOD IN WIRELESS NETWORK AND ELECTRONIC DEVICE FOR PERFORMING SAME**

(30) Priority: 28.02.2022 KR 20220026235; 06.04.2022 KR 20220042858
(71) Applicant: Samsung Electronics Co., Ltd., Suwon-si, Gyeonggi-do 16677 (KR)
(72) Inventor: LEE, Dooho, Suwon-si, Gyeonggi-do 16677 (KR); JUNG, Buseop, Suwon-si, Gyeonggi-do 16677 (KR); LEE, Sunkee, Suwon-si, Gyeonggi-do 16677 (KR)
(74) Representative: HGF
(86) International application number: PCT/KR2023/001486
(87) International publication number: WO 2023/163407

(57) **Abstract**

Disclosed are a wireless communication method in a wireless network and an electronic device for performing same. The electronic device comprises: a communication module; and at least one processor that controls communication performed by the communication module, wherein the at least one processor searches for an electronic device capable of peer-to-peer (P2P) connection, receives, from another electronic device, connection setting information thereof in response to the search, identifies whether the another electronic device supports tunneled direct link setup (TDLS) connection through P2P on the basis of the connection setting information, sends a TDLS connection request to the another electronic device through a group owner device of a P2P group to which the electronic device or the another electronic device belongs when the another electronic device is identified as supporting the TDLS connection through P2P, and causes the electronic device to communicate with the another electronic device through the TDLS connection when the TDLS connection is established with the another electronic device through P2P.

## Description

### TECHNICAL FIELD

The disclosure relates to a wireless communication method in a wireless network.

### BACKGROUND ART

Wi-Fi communication technology refers to communication technology that enables electronic devices to be connected to a wireless local area network (WLAN), and the electronic devices may access the Internet through an access point that accesses an external Internet network. Wi-Fi communication technology has been advanced with the development of related standards, and research is actively underway regarding communication technology for a 6 GHz frequency band and communication technology that enables a broadband wireless connection for a significant number of electronic devices.

Wi-Fi communication technology includes Wi-Fi Direct (or Wi-Fi peer-to-peer (P2P)). Wi-Fi Direct is a Wi-Fi standard that allows electronic devices to be easily connected to one another even without an access point. Through Wi-Fi Direct, TV, and screen mirroring functions may be used, and video sync devices and audio sync devices may be connected separately.

### DISCLOSURE OF THE INVENTION

### TECHNICAL SOLUTIONS

According to an embodiment, an electronic device includes a communication module; and at least one processor configured to control communication performed by the communication module, in which the at least one processor is configured to search for an electronic device to which a peer-to-peer (P2P) connection is allowed, receive connection setup information of another electronic device from the other electronic device in response to the search, identify whether the other electronic device supports a tunneled direct link setup (TDLS) connection through P2P, based on the connection setup information, transmit a TDLS connection request to the other electronic device through a group owner device of a P2P group to which the electronic device or the other electronic device belongs when the other electronic device supports the TDLS connection through P2P, and control to perform communication with the other electronic device through the TDLS connection when the TDLS connection is established through P2P with the other electronic device.

According to another embodiment, an electronic device includes a communication module; and at least one processor configured to control communication performed by the communication module, in which the at least one processor is configured to search for an electronic device to which a P2P connection is allowed, receive connection setup information of another electronic device from the other electronic device in response to the search, identify whether the other electronic device supports a TDLS connection through an access point device, based on the connection setup information, request the other electronic device to be connected to an access point device to which the electronic device is connected or perform a connection to an access point device to which the other electronic device is connected when the other electronic device is identified as supporting the TDLS connection through an access point device, and control to perform communication with the other electronic device through the TDLS connection through an access point device when the other electronic device and the electronic device are connected to the same access point device.

According to another embodiment, a wireless communication method performed by an electronic device includes searching for an electronic device to which a P2P connection is allowed; receiving connection setup information of another electronic device from the other electronic device in response to the search; identifying whether the other electronic device supports a TDLS connection through P2P, based on the connection setup information; transmitting a TDLS connection request to the other electronic device through a group owner device of a P2P group to which the electronic device or the other electronic device belongs when the other electronic device supports the TDLS connection through P2P; and performing communication with the other electronic device through the TDLS connection when the TDLS connection is established through P2P with the other electronic device.

### BRIEF DESCRIPTION OF DRAWINGS

FIG. 1 is a diagram illustrating an overview of a TDLS connection according to an embodiment.
FIG. 2 is a block diagram illustrating an electronic device according to an embodiment.
FIGS. 3, 4A, 4B, and 5 are flowcharts illustrating operations of a wireless communication method according to various embodiments.
FIG. 6 is a diagram illustrating an example of a multi-connection using a TDLS connection through P2P, according to an embodiment.

### BEST MODE FOR CARRYING OUT THE INVENTION

It should be appreciated that various embodiments of the present disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "A, B, or C," each of which may include any one of the items listed together in the corresponding one of the phrases, or all possible combinations thereof. Terms such as "first", "second", or "first" or "second" may simply be used to distinguish the component from other components in question, and do not limit the components in other aspects (e.g., importance or order). As used herein, the expression "have", "may have", "include", or "may include" refers to the existence of a corresponding feature (e.g., numeral, function, operation, or constituent element such as component), and does not exclude one or more additional features.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An electronic device according to various embodiments of the present disclosure may include at least one of, for example, a smart phone, a tablet Personal Computer (PC), a mobile phone, a video phone, an electronic book reader (e-book reader), a desktop PC, a laptop PC, a netbook computer, a workstation, a server, a Personal Digital Assistant (PDA), a Portable Multimedia Player (PMP), a MPEG-1 audio layer-3 (MP3) player, a mobile medical device, a camera, and a wearable device. According to various embodiments, the wearable device may include at least one of an accessory type (e.g., a watch, a ring, a bracelet, an anklet, a necklace, a glasses, a contact lens, or a Head-Mounted Device (HMD)), a fabric or clothing integrated type (e.g., an electronic clothing), a body-mounted type (e.g., a skin pad, or tattoo), and a bio-implantable type (e.g., an implantable circuit).

According to some embodiments, the electronic device may be a home appliance. The home appliance may include at least one of, for example, a television, a Digital Video Disk (DVD) player, an audio, a refrigerator, an air conditioner, a vacuum cleaner, an oven, a microwave oven, a washing machine, an air cleaner, a settop box, a home automation control panel, a security control panel, a TV box (e.g., Samsung HomeSync^{™}, Apple TV^{™}, or Google TV^{™}), a game console (e.g., Xbox^{™} and PlayStation^{™}), an electronic dictionary, an electronic key, a camcorder, and an electronic photo frame.

According to another embodiment, the electronic device may include at least one of various medical devices (e.g., various portable medical measuring devices (a blood glucose monitoring device, a heart rate monitoring device, a blood pressure measuring device, a body temperature measuring device, etc.), a Magnetic Resonance Angiography (MRA), a Magnetic Resonance Imaging (MRI), a Computed Tomography (CT) machine, and an ultrasonic machine), a navigation device, a Global Positioning System (GPS) receiver, an Event Data Recorder (EDR), a Flight Data Recorder (FDR), a Vehicle Infotainment Devices, an electronic devices for a ship (e.g., a navigation device for a ship, and a gyro-compass), avionics, security devices, an automotive head unit, a robot for home or industry, an Automatic Teller's Machine (ATM) in banks, Point Of Sales (POS) in a shop, or internet device of things (e.g., a light bulb, various sensors, electric or gas meter, a sprinkler device, a fire alarm, a thermostat, a streetlamp, a toaster, a sporting goods, a hot water tank, a heater, a boiler, etc.).

Hereinafter, various embodiments of the present disclosure will be described with reference to the accompanying drawings.

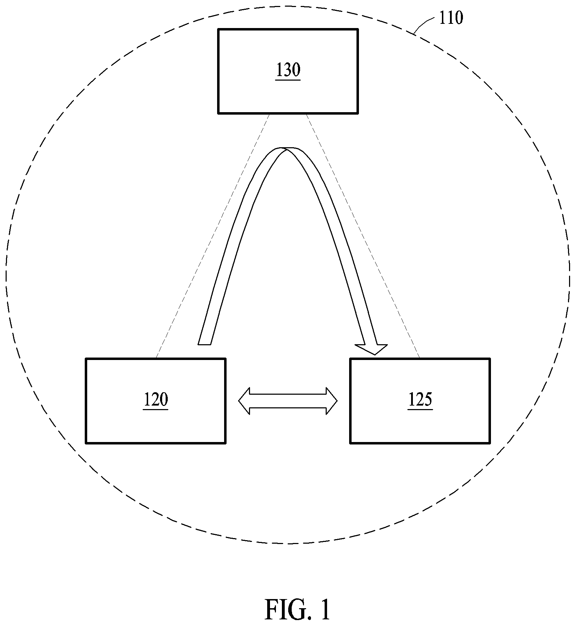

FIG. 1 is a diagram illustrating an overview of a TDLS connection according to an embodiment.

Referring to FIG. 1, a wireless communication network environment 110 may include a plurality of electronic devices 120, 125, and 130 that perform wireless communication. In an embodiment, the electronic device 130 may be an access point (AP) device or a mobile hotspot device. The electronic device 120 and the electronic device 125 may correspond to a 'station,' a 'terminal device,' or a 'non-AP device.'

The wireless communication network environment 110 may operate based on a Wi-Fi network. The Wi-Fi network may include the communication technology of Wi-Fi Direct (or Wi-Fi P2P). Wi-Fi Direct may be communication technology providing a direct connection of electronic devices by using a Wi-Fi interface without using the AP device of the Wi-Fi network. The connecting of electronic devices to one another by using Wi-Fi Direct may refer to a P2P group. Assuming a one-to-one connection, one electronic device in the P2P group may operate as a group owner device, and the remaining one or more electronic devices may operate as group client devices. Multiple group client devices may be connected to the group owner device. The group owner device may play a role as an AP device of a Wi-Fi network, and the group client devices may play a role as a station of the Wi-Fi network. A role to be assigned to each electronic device of the P2P group may be determined through group owner negotiation of a connection process of the Wi-Fi Direct. A one-to-many connection other than the one-to-one connection may also be possible in generating the P2P group, and the number of connectable group client devices may be determined depending on the capability of the group owner device.

Through the connection through Wi-Fi Direct, mirroring (e.g., screen mirroring) may be performed between different electronic devices. For example, a screen of a smartphone is shared with a TV through Wi-Fi Direct, and a user may view a screen output from the smartphone through the TV When performing mirroring through Wi-Fi Direct, a video sync device for screen sharing and an audio sync device for audio sharing may be separately connected. If a source device for mirroring is the group owner device, the video sync device and the audio sync device may be connected to a group client device, and multi-mirroring (or multi-sync-mirroring) may be performed through the one-to-many connection. However, if a TV is a group owner device and a video sync device or an audio sync device is a group client device in a connection through Wi-Fi Direct, multi-mirroring was impossible until now. For example, when the TV was connected to a smartphone through Wi-Fi Direct, and the TV was the group owner device, the smartphone was designated as a group client device, and, in this case, it became impossible to connect an additional device to the smartphone.

According to one or more embodiments described in this disclosure, even when a source device operates as a group client device in a mirroring connection between devices by inducing a target device, to which an additional connection is required to be connected to a group client device, a tunneled direct link setup (TDLS) connection may be induced through P2P between the group client devices. TDLS is network communication technology that supports data sharing without a separate medium for a network between devices. In addition, when the target device does not support the TDLS connection through P2P but supports a TDLS connection through an AP device, the source device may induce the TDLS connection through an AP device to the target device and may enable the implementation of functions, like multi-mirroring. Such a TDLS connection enables an operation with a multi-connection, like multi-mirroring.

In an embodiment, the electronic device 120 (e.g., a source device) may induce a TDLS connection to the electronic device 125 (e.g., a target device), to which an additional connection is intended, for multi-mirroring. The electronic device 120 may be directly connected to the electronic device 125 by a TDLS connection through P2P or may be connected to the electronic device 125 by a TDLS connection through an AP device that transmits or receives data via the electronic device 130 (e.g., an AP device or a group owner device). For example, when the electronic device 120 (e.g., a smartphone) is performing screen mirroring with another device (e.g., a TV) through a P2P connection, the electronic device 120 may perform multi-mirroring in connection with the electronic device 125 (e.g., a wireless audio device) through the TDLS connection through P2P or the TDLS connection through an AP device.

A TDLS connection process may include, for example, a process of the electronic device 120 transmitting a TDLS discovery request signal to the electronic device 125 through the electronic device 130, a process of the electronic device 125 transmitting a TDLS discovery response signal to the electronic device 120 in response to the TDLS discovery request signal, a process of the electronic device 120 transmitting a TDLS setup request signal to the electronic device 125 through the electronic device 130 after receiving the TDLS discovery response signal, a process of the electronic device 125 transmitting a TDLS setup response signal to the electronic device 120 in response to the TDLS setup request signal, and a process of the electronic device 120 transmitting a TDLS confirmation signal to the electronic device 125 through the electronic device 130 after receiving the TDLS setup response signal.

The electronic device 120 may search for a counterpart device (e.g., the electronic device 125) to which a P2P connection is possible and may induce a TDLS connection of a more advantageous case for data communication with the counterpart device based on the information (e.g., information on whether to support the TDLS connection through P2P or information on whether to support the TDLS connection through an AP device) of the searched counterpart device. The electronic device 120 may identify whether the counterpart device supports the TDLS connection through P2P or whether the counterpart device supports the TDLS connection through an AP device by using the information of the counterpart device and may induce the TDLS connection with the counterpart device through an available connection method.

In an embodiment, when the searched counterpart device has already participated in a P2P group as a group client device, the electronic device 120 may participate, as a group client device, in the P2P group in which the counterpart device participates, may establish the TDLS connection (e.g., the TDLS connection through P2P) between the counterpart device and the group client device, and may perform data communication with the counterpart device. In an embodiment, the electronic device 120 may identify various communication methods, which may establish a connection to the counterpart device, through the information of the counterpart device and may induce a connection of the most advantageous communication method among the various communication methods.

In data communication through P2P, if a terminal device, like a smartphone, is a group client device, multi-connection becomes impossible, but this problem may be solved through one or more embodiments described herein. A source device (e.g., the smartphone) may induce a target device, an additional connection to which is intended, to be connected to a group client device of a P2P group and may enable a multi-connection through, primarily, a TDLS connection through a P2P connection and, secondarily, a TDLS connection through an AP device.

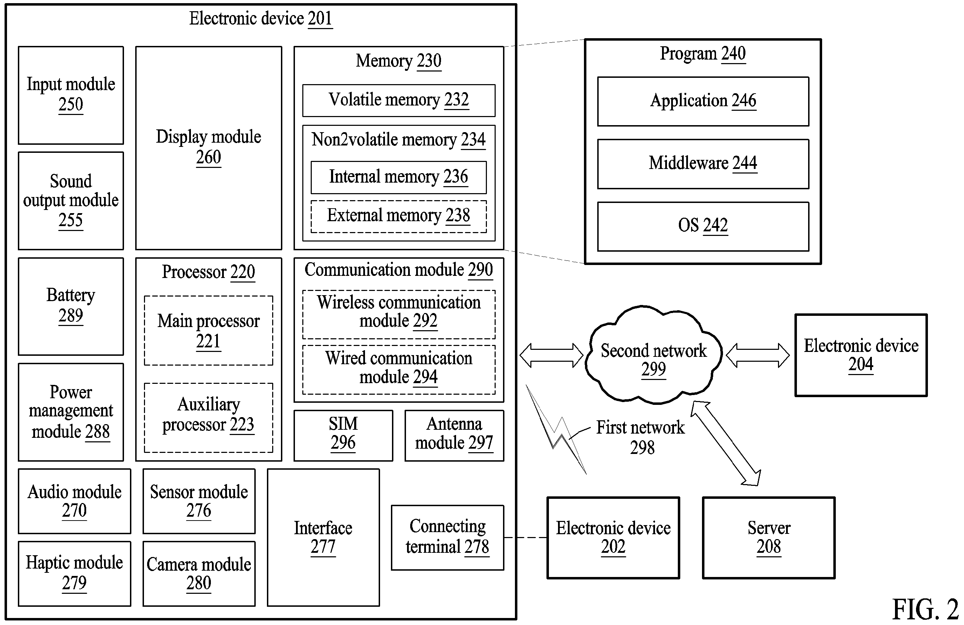

FIG. 2 is a block diagram illustrating an electronic device according to an embodiment.

Referring to FIG. 2, in a network environment 200, an electronic device 201 may communicate with an electronic device 202 through a first communication network 298 (e.g., a Wi-Fi network, Bluetooth^{™} communication, or another short-range wireless communication network) or may communicate with at least one of an electronic device 204 or a server 208 through a second communication network 299 (e.g., a long-range wireless communication network). In an embodiment, the electronic device 201 may correspond to the electronic device 120 of FIG. 1, and the electronic device 202 may correspond to the electronic device 125 of FIG. 1. The electronic device 210 may be connected to the electronic device 202 through an AP device or a mobile hotspot device. The electronic device 201 may communicate with the electronic device 204 through the server 208.

According to an embodiment, the electronic device 201 may include a processor 220, a memory 230, an input module 250, a sound output module 255, a display module 260, an audio module 270, and a sensor module 276, an interface 277, a connecting terminal 278, a haptic module 279, a camera module 280, a power management module 288, a battery 289, a communication module 290, a subscriber identification module (SIM) 296, or an antenna module 297. In some embodiments, at least one of the components (e.g., the connecting terminal 278) may be omitted from the electronic device 201, or one or more other components may be added in the electronic device 201. In some embodiments, some of the components (e.g., the sensor module 276, the camera module 280, or the antenna module 297) may be integrated as a single component (e.g., the display module 260).

The processor 220 may execute, for example, software (e.g., a program 240) to control at least one other component (e.g., a hardware or software component) of the electronic device 201 connected to the processor 220 and may perform various data processing or computation. According to an embodiment, as at least a part of data processing or computation, the processor 220 may store a command or data received from another component (e.g., the sensor module 276 or the communication module 290) in a volatile memory 232, process the command or the data stored in the volatile memory 232, and store resulting data in a non-volatile memory 234. According to an embodiment, the processor 220 may include a main processor 221 (e.g., a central processing unit (CPU) or an application processor) or an auxiliary processor 223 (e.g., a graphics processing unit (GPU), a neural processing unit (NPU), an image signal processor (ISP), a sensor hub processor, or a communication processor (CP)) that is operable independently of, or in conjunction with the main processor 221. For example, when the electronic device 201 includes the main processor 221 and the auxiliary processor 223, the auxiliary processor 223 may be adapted to consume less power than the main processor 221 or to be specific to a specified function. The auxiliary processor 223 may be implemented separately from the main processor 221 or as a portion of the main processor 221.

The auxiliary processor 223 may control at least some of functions or states related to at least one (e.g., the display module 260, the sensor module 276, or the communication module 290) of the components of the electronic device 201, instead of the main processor 221 while the main processor 221 is in an inactive (e.g., sleep) state or along with the main processor 221 while the main processor 221 is an active state (e.g., executing an application). According to an embodiment, the auxiliary processor 223 (e.g., an ISP or a CP) may be implemented as a portion of another component (e.g., the camera module 280 or the communication module 290) that is functionally related to the auxiliary processor 223. According to an embodiment, the auxiliary processor 223 (e.g., an NPU) may include a hardware structure specified for artificial intelligence model processing. An artificial intelligence model may be generated by machine learning. Such learning may be performed, for example, by the electronic device 201 in which an artificial intelligence model is executed, or via a separate server (e.g., the server 208). Learning algorithms may include, but are not limited to, for example, supervised learning, unsupervised learning, semi-supervised learning, or reinforcement learning. The artificial intelligence model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), a bidirectional recurrent deep neural network (BRDNN), and a deep Q-network or a combination of two or more thereof but is not limited thereto. The artificial intelligence model may additionally or alternatively include a software structure other than the hardware structure.

The memory 230 may store various pieces of data used by at least one component (e.g., the processor 220 or the sensor module 276) of the electronic device 201. The various data may include, for example, software (e.g., the program 240) and input data or output data for a command related thereto. The memory 230 may store computer-executable instructions. The processor 220 may execute the instructions by accessing the memory 230. The memory 230 may include the volatile memory 232 or the non-volatile memory 234.

The program 240 may be stored as software in the memory 230, and may include, for example, an operating system (OS) 242, middleware 244, or an application 246. The input module 250 may receive a command or data to be used by another component (e.g., the processor 220) of the electronic device 201, from the outside (e.g., a user) of the electronic device 201. The input module 250 may include, for example, a microphone, a mouse, a keyboard, a key (e.g., a button), or a digital pen (e.g., a stylus pen).

The sound output module 255 may output a sound signal to the outside of the electronic device 201. The sound output module 255 may include, for example, a speaker or a receiver. The speaker may be used for general purposes, such as playing multimedia or playing record. The receiver may be used to receive an incoming call. According to an embodiment, the receiver may be implemented separately from the speaker or as a part of the speaker.

The display module 260 may visually provide information to the outside (e.g., a user) of the electronic device 201. The display module 260 may include, for example, a display, a hologram device, or a projector and control circuitry to control a corresponding one of the display, hologram device, and projector. According to an embodiment, the display module 260 may include a touch sensor adapted to sense a touch, or a pressure sensor adapted to measure an intensity of a force incurred by the touch.

The audio module 270 may convert a sound into an electrical signal or vice versa. According to an embodiment, the audio module 270 may obtain the sound via the input module 250 or output the sound via the sound output module 255 or an external electronic device (e.g., an electronic device 202 such as a speaker or a headphone) directly or wirelessly connected to the electronic device 201.

The sensor module 276 may detect an operational state (e.g., power or temperature) of the electronic device 201 or an environmental state (e.g., a state of a user) external to the electronic device 201 and generate an electrical signal or data value corresponding to the detected state. According to an embodiment, the sensor module 276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, a Hall sensor, or an illuminance sensor.

The interface 277 may support one or more specified protocols to be used for the electronic device 201 to be coupled with the external electronic device (e.g., the electronic device 202) directly (e.g., by wire) or wirelessly. According to an embodiment, the interface 277 may include, for example, a high-definition multimedia interface (HDMI), a universal serial bus (USB) interface, a secure digital (SD) card interface, or an audio interface.

The connecting terminal 278 may include a connector via which the electronic device 201 may be physically connected with the external electronic device (e.g., the electronic device 202). According to an embodiment, the connecting terminal 278 may include, for example, a HDMI connector, a USB connector, a SD card connector, or an audio connector (e.g., a headphone connector).

The haptic module 279 may convert an electrical signal into a mechanical stimulus (e.g., a vibration or a movement) or an electrical stimulus which may be recognized by a user via his or her tactile sensation or kinesthetic sensation. According to an embodiment, the haptic module 279 may include, for example, a motor, a piezoelectric element, or an electric stimulator.

The camera module 280 may take a still image and a video. According to an embodiment, the camera module 280 may include one or more lenses, image sensors, ISPs, or flashes.

The power management module 288 may manage power supplied to the electronic device 201. According to an embodiment, the power management module 288 may be implemented as, for example, at least a part of a power management integrated circuit (PMIC).

The battery 289 may supply power to at least one component of the electronic device 201. According to an embodiment, the battery 289 may include, for example, a primary cell which is not rechargeable, a secondary cell which is rechargeable, or a fuel cell.

The communication module 290 may support establishing a direct (e.g., wired) communication channel or a wireless communication channel between the electronic device 201 and the external electronic device (e.g., the electronic device 202, the electronic device 204, or the server 208) and performing communication via the established communication channel. The communication module 230 may include one or more CPs that are operable independently of the processor 210 (e.g., an AP) and support direct (e.g., wired) or wireless communication. According to an embodiment, the communication module 290 may include a wireless communication module 292 (e.g., a cellular communication module, a short-range wireless communication module, or a global navigation satellite system (GNSS) communication module) or a wired communication module 294 (e.g., a local area network (LAN) communication module, or a power line communication (PLC) module). Among these communication modules, the external electronic device 202 is connected to the corresponding communication module through the first communication network 298 (e.g., a short-range communication network such as Bluetooth, Wi-Fi (wireless fidelity), Wi-Fi Direct, or IrDA). Communicate with, and communicate with, an external electronic device (e.g., a telecommunication network such as a legacy cellular network, a 5G network, a next-generation communication network, the Internet, or a computer network (e.g., a LAN or WAN)) through the second communication network 299 (e.g., a LAN or WAN). 204). These various types of communication modules may be implemented as a single component (e.g., a single chip) or may be implemented as multiple components (e.g., multiple chips) separate from each other. The wireless communication module 292 may identify and authenticate the electronic device 201 in a communication network, such as the first communication network 298 or the second communication network 299, by using subscriber information (e.g., international mobile subscriber identity (IMSI)) stored in the SIM 296.

The wireless communication module 292 may support a 5G network after a 4G network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 292 may support a high-frequency band (e.g., a mmWave band) to achieve, e.g., a high data transmission rate. The wireless communication module 292 may support various technologies for securing performance on a high-frequency band, such as, e.g., beamforming, massive multiple-input and multiple-output (massive MIMO), full dimensional MIMO (FD-MIMO), an array antenna, analog beamforming, or a largescale antenna. The wireless communication module 292 may support various requirements specified in the electronic device 201, an external electronic device (e.g., the electronic device 204), or a network system (e.g., the second network 299). According to an embodiment, the wireless communication module 292 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 297 may transmit or receive a signal or power to or from the outside (e.g., an external electronic device) of the electronic device 201. According to an embodiment, the antenna module 297 may include an antenna including a radiating element including a conductive material or a conductive pattern formed in or on a substrate (e.g., a printed circuit board (PCB)). According to an embodiment, the antenna module 297 may include a plurality of antennas (e.g., array antennas). In such a case, at least one antenna appropriate for a communication scheme used in a communication network, such as the first communication network 298 or the second communication network 299, may be selected by, for example, the communication module 290 from the plurality of antennas. The signal or the power may be transmitted or received between the communication module 290 and the external electronic device via the at least one selected antenna. According to an embodiment, another component (e.g., a radio frequency integrated circuit (RFIC)) other than the radiating element may be additionally formed as a part of the antenna module 297.

According to an embodiment, the antenna module 297 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 201 and the external electronic device 204 via the server 208 coupled with the second communication network 299. Each of the external electronic devices 202 and 204 may be a device of the same type as or a different type from the electronic device 201. According to an embodiment, all or some of operations to be executed by the electronic device 201 may be executed at one or more external electronic devices (e.g., the external devices 202 and 204, and the server 208). For example, if the electronic device 201 needs to perform a function or a service automatically, or in response to a request from a user or another device, the electronic device 201, instead of, or in addition to, executing the function or the service, may request one or more external electronic devices to perform at least part of the function or the service. The one or more external electronic devices receiving the request may perform the at least part of the function or the service requested, or an additional function or an additional service related to the request and transfer an outcome of the performing to the electronic device 201. The electronic device 201 may provide the outcome, with or without further processing of the outcome, as at least part of a reply to the request. To that end, a cloud computing, distributed computing, mobile edge computing (MEC), or client-server computing technology may be used, for example. The electronic device 201 may provide ultra-low-latency services using, e.g., distributed computing or MEC. In another embodiment, the external electronic device (e.g., the electronic device 204) may include an Internet-of-things (IoT) device.

The server 208 may be an intelligent server using machine learning and/or a neural network. According to an embodiment, the external electronic device 204 or the server 208 may be included in the second network 299. The electronic device 201 may be applied to intelligent services (e.g., smart home, smart city, smart car, or healthcare) based on 5G communication technology or IoT-related technology.

According to an embodiment, the electronic device 201 may identify the possibility of a TDLS connection with another electronic device (e.g., the electronic device 202) through a search and may induce the TDLS connection to the other electronic device for a multi-connection (e.g., multi-mirroring). In an embodiment, the electronic device 201 may include at least one processor, and the at least one processor may control communication performed by the communication module 290. The at least one processor may include, for example, at least one of the processor 220 (e.g., a CPU or an application processor) and/or a processor included in the communication module 290.

The at least one processor may search for an electronic device to which a P2P connection is possible and may receive connection setup information (e.g., a P2P probe response signal or a TDLS discovery response signal) of another electronic device from the other electronic device in response to the search. To search for the electronic device to which a P2P connection is possible, the electronic device 201 may transmit a P2P probe request signal and a TDLS discovery request signal and may receive a P2P probe response signal and a TDLS discovery response signal from the other electronic device in response to the transmission.

The connection setup information may include, for example, information on whether the other electronic device that is obtainable from the TDLS discovery response signal supports a TDLS connection through P2P, information on an AP device to which the other electronic device is connected, and/or information on a communication channel of the other electronic device. In addition, the connection setup information may obtain information on a P2P group that is obtainable from the P2P probe response signal. The information on a P2P group may include, for example, information on whether the other electronic device participates in the P2P group, a role (e.g., a group owner device or a group client device) of the other electronic device in the P2P group, the capability of the P2P group to which the other electronic device is connected, a basic service set identifier (BSSID) (or SSID) of the P2P group, and/or an operating channel of the P2P group. In addition, the connection setup information may also include information on whether the other electronic device supports the TDLS connection through an AP device, information on whether the other electronic device is connected to the AP device, and/or information (e.g., the BSSID or SSID, encryption-related information, or channel information of the AP device) on the AP point to which the other electronic device is connected.

The at least one processor may identify whether the other electronic device supports the TDLS connection through P2P based on the connection setup information.

When the other electronic device is identified as supporting the TDLS connection through P2P, the at least one processor may transmit a TDLS connection request to the other electronic device through the group owner device of a P2P group to which the other electronic device belongs, and, when the TDLS connection through P2P is established with the other electronic device, may control to perform communication with the other electronic device through the TDLS connection.

The at least one processor may transmit a request to invite the other electronic device to a P2P group when the other electronic device is identified as supporting the TDLS connection through P2P, and the electronic device 210 corresponds to a group client device of the P2P group.

The at least one processor may transmit the TDLS connection request to the other electronic device through the group owner device of the P2P group when the other electronic device is identified as participating in the P2P group as a group client device.

The at least one processor may transmit a request to participate in the P2P group to which the other electronic device belongs as a group client device when the other electronic device is identified as supporting the TDLS connection through P2P, and the other electronic device corresponds to a group client device of the P2P group.

The at least one processor may transmit the TDLS connection request to the other electronic device through the group owner device of the P2P group when participating in the P2P group as a group client device.

The at least one processor may identify whether the other electronic device supports a TDLS connection through an AP device based on the connection setup information when the other electronic device does not support the TDLS connection through P2P.

The at least one processor may request a connection to an AP device which the electronic device 201 connects to the other electronic device or may perform a connection to an AP device to which the other electronic device is connected when the other electronic device is identified as supporting the TDLS connection through an AP device. The at least one processor may transmit the connection setup information of the AP device that the electronic device 201 connects to the other electronic device.

The at least one processor may control to perform communication with the other electronic device through the TDLS connection through an AP device when the other electronic device and the electronic device 201 are connected to the same AP device.

According to another embodiment, at least one processor may identify whether another electronic device supports a TDLS connection through an AP device based on connection setup information. The at least one processor may request a connection to an AP device which the electronic device 201 connects to the other electronic device or may perform a connection to an AP device to which the other electronic device is connected when the other electronic device is identified as supporting the TDLS connection through an AP device. The at least one processor may request a connection to an AP device which the electronic device 201 connects to the other electronic device when the electronic device 201 is identified as connected to the AP device. The at least one processor may perform a connection to an AP device to which the other electronic device is connected when the other electronic device is identified as connected to the AP device. The at least one processor may control to perform communication with the other electronic device through the TDLS connection through an AP device when the other electronic device and the electronic device 201 are connected to the same AP device.

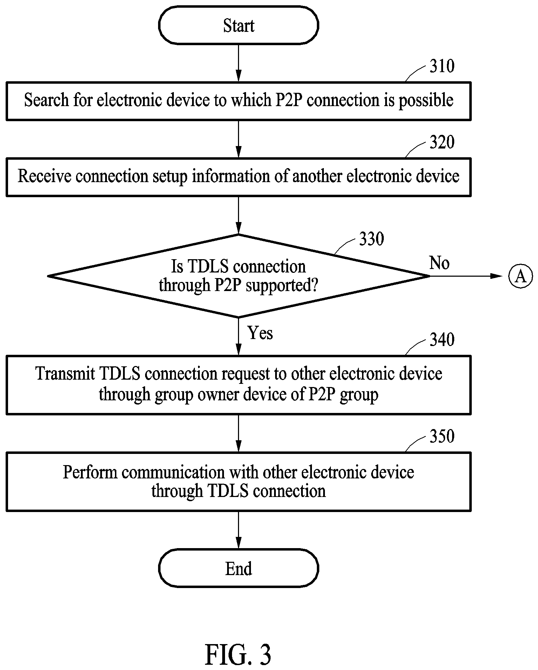

FIGS. 3, 4A, 4B, and 5 are flowcharts illustrating operations of a wireless communication method according to various embodiments. The wireless communication method may be performed by an electronic device (e.g., the electronic device 120 of FIG. 1 or the electronic device 201 of FIG. 2).

Referring to FIG. 3, in operation 310, the electronic device may search for an electronic device to which a P2P connection is possible. For example, the electronic device (e.g., a smartphone) may perform a P2P connection search to perform a P2P connection to another electronic device (e.g., wireless earphones) that has already established a P2P connection to a third electronic device (e.g., a TV) or to additionally perform a P2P connection to the other electronic device (e.g., the wireless earphones) other than the already established P2P connection to the third electronic device (e.g., the TV).

In operation 320, the electronic device may receive connection setup information of another electronic device from the other electronic device in response to the search of operation 310. The connection setup information may include, for example, information on whether the other electronic device supports a TDLS connection through P2P, information on an AP device to which the other electronic device is connected, information on a communication channel of the other electronic device, information on a P2P group, information on whether the other electronic device supports a TDLS connection through an AP device, and/or the information on the AP device to which the other electronic device is connected.

In operation 330, the electronic device may identify whether the other electronic device supports the TDLS connection through P2P based on the connection setup information.

When the other electronic device is identified as supporting the TDLS connection through P2P, in operation 340, the electronic device may transmit a TDLS connection request to the other electronic device through a group owner device of a P2P group to which the electronic device or the other electronic device belongs.

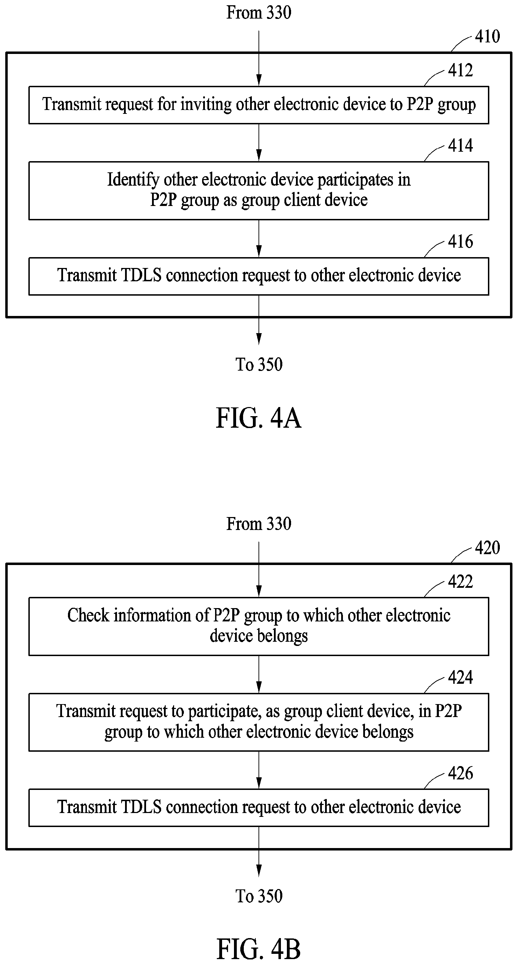

Operation 340 may be classified into two cases: a case where the TDLS connection is intended to be performed with the other electronic device while the electronic device has already participated in the P2P group as a group client device; and a case where the TDLS connection is intended to be performed with the other electronic device while the other electronic device has already participated in the P2P group as a group client device. The former is described through operation 410 of FIG. 4A, and the latter is described through operation 420 of FIG. 4B.

When the electronic device has already participated in the P2P group and corresponds to a group client device of the P2P group, the electronic device may perform operations of operation 410 illustrated in FIG. 4A. Referring to FIG. 4A, in operation 412, the electronic device may transmit a request (e.g., an invitation message) to invite the other electronic device to the P2P group to which the electronic device belongs. In operation 414, the electronic device may identify that the other electronic device participates, as a group client device, in the P2P group to which the electronic device belongs. When the other electronic device is identified as participating, as a group client device, in the P2P group to which the electronic device belongs, in operation 416, the electronic device may transmit a TDLS connection request to the other electronic device. The electronic device may transmit the TDLS connection request (e.g., a TDLS setup request signal) to the other electronic device through the group owner device of the P2P group.

When the other electronic device has already participated in the P2P group and corresponds to a group client device of the P2P group, the electronic device may perform operations of operation 420 illustrated in FIG. 4B. Referring to FIG. 4B, in operation 422, the electronic device may check the information of the P2P group to which the other electronic device belongs. The information of the P2P group may be obtained from a P2P probe response signal transmitted by the other electronic device and may include, for example, information on the capability, BSSID (or SSID), and/or operating channel of the P2P group. In operation 424, the electronic device may transmit a request to participate, as a group client device, in the P2P group to which the other electronic device belongs. When the electronic device completes the participating, as a group client device, in the P2P group to which the other electronic device belongs, in operation 426, the electronic device may transmit a TDLS connection request to the other electronic device. The electronic device may transmit the TDLS connection request (e.g., a TDLS setup request signal) to the other electronic device through the group owner device of the P2P group.

In operation 350, the electronic device may perform communication with the other electronic device through the TDLS connection when the TDLS connection is established through P2P with the other electronic device. The electronic device may receive a TDLS setup response signal from the other electronic device in response to the TDLS setup request signal transmitted to the other electronic device and may complete the TDLS connection through P2P with the other electronic device. The electronic device, through a group client device-to-group client connection of the P2P group with the other electronic device, may implement a multi-connection together with the P2P connection that has already been established.

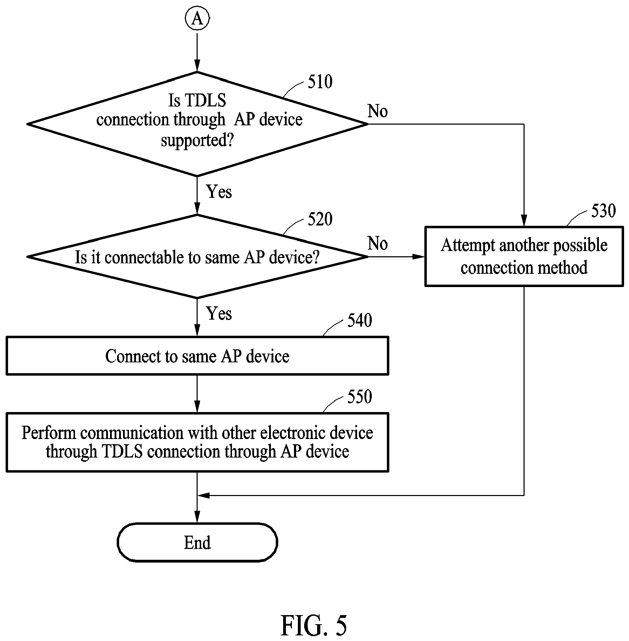

In operation 330 of FIG. 3, when the other electronic device is identified as not supporting the TDLS connection through P2P, the electronic device may perform operations illustrated in FIG. 5.

Referring to FIG. 5, in operation 510, the electronic device may identify whether another electronic device supports a TDLS connection through an AP device based on connection setup information. According to embodiments, after operation 320, operation 510 may be directly performed without performing operation 330.

When the other electronic device is identified as supporting the TDL connection through an AP device, in operation 520, the electronic device may determine whether the electronic device may be connected to the same AP device as that of the other electronic device. The electronic device and the other electronic device may exchange information on AP devices to which they are respectively connected and may determine whether they are connectable to the same AP device.

When the electronic device and the other electronic device are determined to be connectable to the same AP device, in operation 540, the electronic device may perform a connection to the same AP device. For example, the electronic device may request the other electronic device to be connected to the AP device that the electronic device is connected to or may perform a connection to the AP point to which the other electronic device is connected.

In an embodiment, when the electronic device is connected to an AP device, the electronic device may induce the other electronic device to be connected to the AP device. The electronic device may transmit, to the other electronic device, information (e.g., the BSSID or SSID, encryption-related information, or channel information of the AP device) on the AP device to which the electronic device is connected. The electronic device may request the other electronic device to be connected to the AP device that the electronic device is connected to. Based on the information received from the electronic device, the other electronic device may determine whether the other electronic device is connectable to the AP device to which the electronic device is connected, and, when determined to be connectable to the AP point, may attempt a connection to the AP device.

In an embodiment, when the other electronic device is connected to an AP device, the electronic device may attempt a connection to the AP device to which the other electronic device is connected. The electronic device may receive, from the other electronic device, information (e.g., the BSSID or SSID, encryption-related information, or channel information of the AP device) on the AP device to which the other electronic device is connected, and, based on the information, may attempt a connection to the AP device to which the other electronic device is connected.

In operation 550, the electronic device may control to perform communication with the other electronic device through the TDLS connection through an AP device when the electronic device and the other electronic device are connected to the same AP device.

When the other electronic device is identified as not supporting the TDLS connection through an AP device, or the electronic device and the other electronic device are not connectable to the same AP device, in operation 530, the electronic device may attempt another possible connection method (e.g., a connection through Bluetooth^{™} communication) for a connection to the other electronic device.

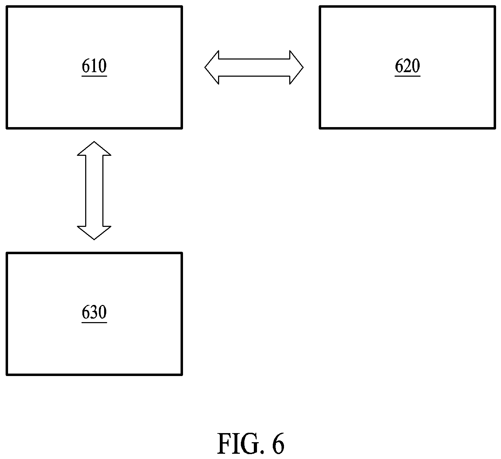

FIG. 6 is a diagram illustrating an example of a multi-connection using a TDLS connection through P2P, according to an embodiment.

The wireless communication method described herein may also apply to another application (e.g., file sharing) using a P2P connection other than screen mirroring. Referring to FIG. 6, an electronic device 610 may transmit data (or a file) to an electronic device 620 through a P2P connection. The electronic device 620 may also transmit data to the electronic device 610 through the P2P connection. When transmitting or receiving data through a P2P connection, a device on one end may be a group owner device of a P2P group and a device on the other end may be a group client device of the P2P group. The present embodiment assumes that the electronic device 620, as a group owner device, may be connected to the electronic device 610 as a group client device.

A typical electronic device designated as a group client device was not able to perform a multi-connection through an additional P2P connection. However, according to the wireless communication method proposed herein, the electronic device 610 may induce a TDLS connection through P2P or a TDLS connection through an AP device to an electronic device, to which an additional connection is intended, and may perform additional P2P communication with the electronic device 630. The electronic device 630 may participate as a group client device of the P2P group to which the electronic device 610 and the electronic device 620 belong and may transmit and receive data to and from the electronic device 610 through the TDLS connection.

According to at least one embodiment of the present disclosure, even when a source device operates as a group client device of a P2P group, multi-mirroring may be implemented by inducing a target device, to which an additional connection is required, to be connected to a group client device of the P2P group, and by causing a TDLS connection through P2P to be performed.

In addition, according to at least one embodiment of the present disclosure, when the target device does not support the TDLS connection through P2P, multi-mirroring may be implemented by inducing the target device to perform a TDLS connection through an AP device.

Various example embodiments as set forth herein may be implemented as software (e.g., the program 240) including one or more instructions that are stored in a storage medium (e.g., the internal memory 236 or the external memory 238) that is readable by a machine (e.g., the electronic device 201). For example, a processor (e.g., the processor 220) of the machine (e.g., the electronic device 201) may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to one embodiment, a method according to embodiments of the disclosure may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various example embodiments, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to an embodiment, the integrated component may still perform one or more functions of each of the components in the same or similar manner as they are performed by a corresponding one among the components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device 201 comprising:
a communication module 290; and
at least one processor 220 configured to control communication performed by the communication module 290, wherein
the at least one processor 220 is configured to
search for an electronic device to which a peer-to-peer (P2P) connection is allowed,
receive connection setup information of another electronic device from the other electronic device in response to the search,
identify whether the other electronic device supports a tunneled direct link setup (TDLS) connection through P2P, based on the connection setup information,
transmit a TDLS connection request to the other electronic device through a group owner device of a P2P group to which the electronic device 201 or the other electronic device belongs when the other electronic device supports the TDLS connection through P2P, and
control to perform communication with the other electronic device through the TDLS connection when the TDLS connection is established through P2P with the other electronic device.

2. The electronic device 201 of claim 1, wherein
the at least one processor 220 is configured to
transmit a request to invite the other electronic device to the P2P group when the other electronic device is identified as supporting the TDLS connection through P2P, and the electronic device 201 corresponds to a group client device of the P2P group.

3. The electronic device 201 of claim 2, wherein
the at least one processor 220 is configured to
transmit the TDLS connection request to the other electronic device through the group owner device of the P2P group when the other electronic device is identified as participating in the P2P group as a group client device.

4. The electronic device 201 of claim 1, wherein
the at least one processor 220 is configured to
transmit a request to participate in the P2P group to which the other electronic device belongs as a group client device when the other electronic device is identified as supporting the TDLS connection through P2P, and the other electronic device corresponds to a group client device of the P2P group.

5. The electronic device 201 of claim 4, wherein
the at least one processor 220 is configured to
transmit the TDLS connection request to the other electronic device through the group owner device of the P2P group when participating in the P2P group as a group client device.

6. The electronic device 201 of any one of claims 1 to 5, wherein the connection setup information comprises:
information on whether the other electronic device supports the TDLS connection through P2P and a communication channel of the other electronic device.

7. The electronic device 201 of claim 1, wherein
the at least one processor 220 is configured to
identify whether the other electronic device supports the TDLS connection through an access point device based on the connection setup information when the other electronic device does not support the TDLS connection through P2P, and
the connection setup information comprises:
information on whether the other electronic device supports the TDLS connection through an access point device.

8. The electronic device 201 of claim 7, wherein
the at least one processor 220 is configured to
request the other electronic device to be connected to an access point device to which the electronic device 201 is connected or perform a connection to an access point device to which the other electronic device is connected when the other electronic device is identified as supporting the TDLS connection through an access point device.

9. The electronic device 201 of claim 8, wherein
the at least one processor 220 is configured to
transmit connection setup information of the access point device which the electronic device 201 connects to the other electronic device.

10. The electronic device 201 of claim 8 or 9, wherein
the at least one processor 220 is configured to
perform communication with the other electronic device through the TDLS connection through an access point device when the other electronic device and the electronic device 201 are connected to the same access point device.

11. An electronic device 201 comprising:
a communication module 290; and
at least one processor 220 configured to control communication performed by the communication module, wherein
the at least one processor 220 is configured to
search for an electronic device to which a peer-to-peer (P2P) connection is allowed,
receive connection setup information of another electronic device from the other electronic device in response to the search,
identify whether the other electronic device supports a tunneled direct link setup (TDLS) connection through an access point device, based on the connection setup information,
request the other electronic device to be connected to an access point device to which the electronic device 201 is connected or perform a connection to an access point device to which the other electronic device is connected when the other electronic device is identified as supporting the TDLS connection through an access point device, and
control to perform communication with the other electronic device through the TDLS connection through an access point device when the other electronic device and the electronic device 201 are connected to the same access point device.

12. The electronic device 201 of claim 11, wherein
the at least one processor 220 is configured to
request the other electronic device to be connected to an access point device to which the electronic device 201 is connected when the electronic device 201 is identified as connected to the access point device.

13. The electronic device 201 of claim 12, wherein
the at least one processor 220 is configured to
transmit connection setup information of the access point device which the electronic device 201 connects to the other electronic device.

14. The electronic device 201 of claim 11, wherein
the at least one processor 220 is configured to
perform a connection to an access point device to which the other electronic device is connected when the other electronic device is identified as connected to the access point device.

15. A wireless communication method performed by the electronic device 201, the wireless communication method comprising:
searching for an electronic device to which a peer-to-peer (P2P) connection is allowed;
receiving connection setup information of another electronic device from the other electronic device in response to the search;
identifying whether the other electronic device supports a tunneled direct link setup (TDLS) connection through P2P, based on the connection setup information;
transmitting a TDLS connection request to the other electronic device through a group owner device of a P2P group to which the electronic device 201 or the other electronic device belongs when the other electronic device supports the TDLS connection through P2P; and
performing communication with the other electronic device through the TDLS connection when the TDLS connection is established through P2P with the other electronic device.
